# EUROPEAN PATENT APPLICATION

(11) **EP 4 344 804 A1**
(43) Date of publication of application: **03.04.2024**
(21) Application number: 22198814.0
(22) Date of filing: 29.09.2022
(51) Int. Cl.: B22F 1/05, B22F 9/08, B22F 10/22, B22F 10/28, B22F 10/34, B33Y 10/00, B33Y 70/00, B33Y 80/00, C22C 1/04, C22C 21/00, B22F 10/25, B22F 3/24, B22F 9/04, C22F 1/04

(54) **HIGHLY CONDUCTIVE ALUMINIUM ALLOY**

(71) Applicant: EOS GmbH Electro Optical Systems, 82152 Krailling (DE)
(72) Inventor: Jukka, Simola, 32200 Loimaa (FI); Eero, Virtanen, 20660 Littoinen (FI)
(74) Representative: Meissner Bolte Partnerschaft mbB

(57) **Abstract**

The present application is concerned with aluminium alloys in powder form, which comprise up to 8 wt.-% Ni and up to 4 wt.-% Fe. Corresponding alloys provide for a beneficial combination of high conductivity, moderate strength, good wear resistance and good stability at temperatures of up to 250°C. The powder has a particle size d50 of from 2 to 90 µm, which makes the powder particularly suitable for powder bed based additive manufacturing processes. The present application is further concerned with processes for the production of such aluminium alloy powders, methods for the production of three-dimensional objects using corresponding aluminium alloy powders and three-dimensional objects prepared accordingly, and combinations of devices for the production of such three-dimensional objects and corresponding aluminium alloy powders.

## Description

The present application is concerned with aluminium alloys in powder form, which comprise up to 8 wt.-% Ni and up to 4 wt.-% Fe. Corresponding alloys provide for a beneficial combination of characteristics including high conductivity, moderate strength, good wear resistance and good stability at temperatures of up to 250°C. The powder is characterised in having a particle size d50 of from 2 to 90 µm, which makes the powder particularly suitable for powder bed based additive manufacturing processes. The present application is further concerned with processes for the production of such aluminium alloy powders, methods for the production of three-dimensional objects using corresponding aluminium alloy powders and corresponding three-dimensional objects prepared accordingly, and combinations of devices for the production of such three-dimensional objects and corresponding aluminium alloy powders.

### State of the art

Aluminium alloys, and in particular aluminium alloys providing high strength, are subject of intensive research in the manufacture of vehicles and aeroplanes, particularly automobiles, as there is a continuous aim at improving the performance and fuel efficiency. Such alloys can conventionally be processed by bulk forming processes, such as by extrusion, rolling, forging, stamping, or casting techniques, such as die casting, sand casting, investment casting (fine casting), gravity die casting and the like, to the desired components.

In recent years, "rapid prototyping" or "rapid tooling" has gained more and more attention in metalworking. These methods are also known as selective laser sintering and selective laser melting. In the method, a thin layer of a material in powder form is applied repeatedly and the material is selectively solidified in each layer in the areas in which the later product is located. By exposure to a laser beam, the material is first melted at predetermined positions and then solidified. Thus, a complete three-dimensional body can successively be built.

A method for producing three-dimensional objects by selective laser sintering or selective laser melting and an apparatus for carrying out this method is disclosed, for example, in EP 1 762 122 A1.

The most widely used aluminium alloy in rapid prototyping and tooling, in particular for aerospace and automotive applications, is AlSi10Mg, which comprises Si and Mg as the major alloying elements (Si 10 wt.-% and Mg about 0.45 wt.-% respectively). Due to the strengthening mechanism from Si and Mg additions, this alloy can reach moderate strength. However, as a trade-off the alloying elements Si and Mg detrimentally affect the conductivity of the alloy. While conductivity of aluminium alloys is generally good, highly alloyed grades are far from the theoretical maximum of 240 W/mK thermal conductivity and about 64% IACS (= International annealed copper standard) electrical conductivity of a high purity aluminium alloy.

By reducing the content of alloying elements, the conductivity of aluminium can be improved, but in this case the strength and the processability of the alloys in additive manufacture (AM) is compromised. For example, in additive manufacture processing of traditional wrought aluminium alloys such as EN-AW 6060, EN-AW 6082or EN-AW 6101 cracking is frequently observed. Pure aluminium, on the other, hand has only about 1/4 of the strength of AlSi10Mg rendering it nearly useless as a construction material. High reflectivity of unalloyed aluminium also reduces the coupling efficiency of laser energy, increasing defects, such as lack-of-fusion (LOF) porosity. In addition, there is a tendency of cold soldering in abrasive sliding contact between steel blade and pure aluminium, which can cause sticking of the recoater blade to parts during an AM building process. This is leading to interruption or fail to the part building process.

Conduction of heat and electricity in metals is attributed to free travel of electrons in the material and for transfer of thermal energy also partly due to phonon conductivity, i.e. lattice vibrations. The main mode is however electron conduction.

Cast alloy grades such as F357 (AlSi7Mg0.6) can be heat treated to influence their mechanical behaviour due to their ability to create supersaturated solid solutions that will be later precipitated in ageing. Peak aged condition is however reducing the conductivity. High solubility of alloying elements is one key factor of reducing conductivity. The more alloying elements get trapped in the lattice of the matrix metal, the more they hinder the electron and phonon conductivity by distorting the metal lattice. If the supersaturation is reduced for example by ageing heat treatment to form precipitates (small separate particles of different phases), the conductivity can often be improved. If, however, there is high coherence and mismatch between the newly forming particles and the aluminium matrix, as is the case in peak hardened condition, conductivity can again be reduced by lattice distortions, which are induced by precipitates.

Accordingly, there is a need for an aluminium alloy, which can be processed by an additive manufacturing process based on a powder bed of the alloy, and which provides high conductivity, good wear resistance and a good stability at elevated temperatures.

The present application addresses these needs.

### Description of the invention

In the investigation underlying this invention, it was unexpectedly found that an aluminium alloy powder, which comprises up to 8 wt.-% Ni and up to 4 wt.-% Fe provides for an improved compromise of conductivity, wear resistance and stability at elevated temperatures, and can be processed by additive manufacturing to provide corresponding three-dimensional objects via a powder bed method or from a corresponding powder.

Accordingly, in a first aspect, the present application pertains to an aluminium alloy in powder form, which comprises up to 8 wt.-% Ni and up to 4 wt.-% Fe, and which is characterised in that the alloy has a particle size d50 as determined according to ISO 13320 by laser scattering or laser diffraction of from 2 to 90 µm. Preferably, to target applications requiring high conductivity, in this aluminium alloy the quantity of alloying elements is less than 4 wt.-% and more preferably less than 2 wt.-%, where the balance to 100 wt.-% is provided by aluminium, optional additions and unavoidable impurities (including non-metals such as N, C and O). More preferably, the aluminium alloy further comprises up to 1 wt.-% of alloy elements other than Al, Fe and Ni, in particular in the form of elements, which can be precipitated for added strength using heat treatments with a slight compromise to conductivity (as optional additions), and unavoidable impurities, where the balance to 100 wt.-% is provided by aluminium. Examples of elements, which can be precipitated for added strength using heat treatments, include especially Cu, Sc Zr, Mg, Ag, Mn, Sn, Cr, Li and/or Bi, which can be incorporated into the aluminium alloy alone or as a mixture of one or more thereof, typically in an amount of up to 0.5 wt.-%. In one particularly preferred embodiment, the balance of the Ni and Fe contents to 100 wt.-% is provided by aluminium and unavoidable impurities.

As an alternative to the aluminium powder as noted above, it is also possible to use a mixture of an elemental aluminium powder and an aluminium alloy powder, where the amount of Ni and Fe in the powder are up to 8 wt.-% and up to 4 wt.-%, respectively. In addition, it is also possible to use elemental powders where the combination of aluminium powder, Ni powder and Fe powder is such that the mixture contains up to 8 wt.-% and up to 4 wt.-%, respectively. Such mixtures in the following are also designated as "mixture of powders in accordance with the requirements of the aluminium alloy in powder form". For the sake of conciseness, in the following a reference to the inventive aluminium alloy in powder form is intended to also encompass embodiments, where a composition consists of a powder mixture comprising one or more elemental powders or an elemental powder (e.g. of aluminium) and a prealloy in a ratio, which on processing provides a product with a composition of the respective aluminium alloy in powder form.

Aluminium alloys comprising Fe and Ni as transition metals are known e.g. from Koatidis S. et al., Metallurgical and material transactions A 2020, Vol. 51A, pp. 4195-4214, which investigates such alloys for use in casting applications. Further, aluminium alloys comprising 1 wt.-% of Fe and 1 wt.-% of Ni are known from Silva B.L. et al, Journal of alloys and compounds, 691 (2017), pp. 952-60, where the microstructure and mechanical resistances of as-atomized and as-extruded samples of this alloy had been investigated.

Further, aluminium alloys comprising 1 to 17 wt. % Ni and 1 to 8 wt. % Fe are disclosed in WO 2018/119283 A1, but this document does not disclose an aluminium alloy within the contents limits as above.

In the inventive aluminium alloy powders, the indication "comprising up to 8 wt.-% Ni and up to 4 wt.-% Fe" means, that the aluminium alloy contains at least one of Ni or Fe in a relevant quantity (at least 0.1 wt.-%). Preferably, the aluminium alloy comprises at least 0.1 wt.-% of Ni and Fe.

Iron and nickel as alloying elements provide the advantage, that they have a low solubility in the aluminium matrix (the solubility of these elements in aluminium is very small or even negligible). In addition, the Fe reduces the soldering tendency of aluminium with tool steels and thus alleviates the above indicated problems in the processing of the aluminium alloy powder.

In a preferred embodiment, the aluminium alloy in powder comprises up to 4 wt.-% of Ni, preferably at least 0.2 and/or not more than 2 wt.-% Ni, and more preferably at least 0.8 and/or not more than 1.6 wt.-% of Ni or at least 0.4 and/or not more than 1.2 wt.-% of Ni. Alternatively, or in addition, the aluminium alloy in powder form comprises up to 2 wt.-% Fe, preferably up to 0.6 wt.-% and more preferably at least 0.2 and/or not more than 0.5 wt.-% of Fe.

As noted above, in one preferred embodiment the inventive aluminium alloy powder comprises both Fe and Ni. In this case, the aluminium alloy powder can comprise Ni in an excess over Fe. In one embodiment, the ratio of Ni/Fe is in a range of from 1.2 : 1 to 6 : 1 and in particular 1.5 : 1 to 4.5 : 1.

On the other hand, vanadium, chromium and titanium as alloying elements detrimentally affect the conductivity of the alloy, so that it is preferred that these Elements, if present, are only present in a combined quantity of equal to or less than 1 wt.-%, more preferably equal to or less than 0,5 wt.-%, and even more preferably equal to or less than 0,1 wt.-% in the inventive aluminium alloy powder. Most preferably, vanadium, chromium and titanium are not present in more than unavoidable trace quantities in the inventive aluminium alloy powder.

The powder to constitute the aluminium alloy in powder form has to have a particle size, which enables an adequate processing when the powder is employed in an additive manufacturing method. Suitably, the aluminium alloy powder has a particle size as expressed by a median grain size d50 (as determined by laser scattering or laser diffraction according to ISO 13320:2009), of 15 µm or more, and preferably 25 µm or more. On the other hand, the median grain size of the aluminium alloy powder should preferably be 75 µm or less and more preferably 50 µm or less. The d50 in the context of the determination of particle sizes is determined e.g. with a HELOS device from Sympatec GmbH.

For the inventive aluminium alloy powders a reduced tendency for sticking to steel recoater blades as well as a reduction of other processing difficulties is observed, when compared with pure aluminium grades.

A second aspect of the present invention concerns a process for the preparation of a powder mixture as described herein above, wherein a molten aluminium alloy having a composition as indicated above is atomized in an appropriate device or is prepared by dry alloying elemental metal powders or precursor powders having two or more elements in them. Also, one or all of the components of the aluminium alloy can be produced by grinding into particles from a solid precursor or by rapid solidification methods such as melt spinning.

In a third aspect, the present invention concerns a process for the manufacture of a three-dimensional object, wherein an aluminium alloy in powder form comprising up to 8 wt.-% Ni and up to 4 wt.-% Fe or a mixture of respective elemental or mixed elemental powder precursors thereof is provided, and the object is prepared by applying the aluminium alloy in powder form or powder mixture layer on layer and selectively solidifying the powder, in particular by application of electromagnetic radiation or electron beam radiation, at positions in each layer, which correspond to the cross section of the object in this layer, wherein the positions are scanned with an interaction zone, in particular with a radiation interaction zone of an energy beam bundle. Preferably, in this process the aluminium alloy in powder form is an aluminium alloy in powder form as defined above, i.e. a powder having particle size d50 as determined according to ISO 13320 by laser scattering or laser diffraction of from 2 to 90 µm.

Such a process in one embodiment is conducted as a selective laser sintering (SLS) or selective laser melting (SLM) process, which is also sometimes designated as "direct metal laser sintering (DMLS).

Alternatively, the process could be conducted such, that the solidification of the powder mixture in the areas, where the three-dimensional object is to be created, is accomplished by application of a binding agent onto the powder, which may optionally be cured, e.g. by application of electromagnetic radiation, to provide a consolidated powder structure (also in some cases designated as "green object"). This object can then be converted to the final three-dimensional object by a sintering process, where the binding agent is degraded and thus removed from the object, while the powder particles form a consolidated dense object. Such process is commercialised e.g. by HP as "Multi jet fusion".

Irrespective of which of the above indicated processes is used, the application or application layer on layer is preferably carried out in a layer thickness suitable for processing by means of additive manufacturing, for example with a layer thickness in the range from 20 to 60 µm, preferably with a thickness of at least 25 and/or at most 50 µm and more preferably at a thickness of at least 30 and/or at most 40 µm.

The process according to the invention can also be conducted in a manner that the building material is introduced into the radiation exposure area of an energy source, e.g. a laser, and is melted and applied to a substrate. In such a method, which is also referred to as laser cladding in the mode of powder deposition welding, a powder is sprayed in the form of points onto a substrate via one or more nozzles, and at the same time a laser is aimed at the application point of the laser. The substrate is melted by the radiation energy and the applied alloy powder is melted so that the applied alloy can bond with the melted substrate. In this way, a layer of the particulate material is applied to the workpiece and bonded to a surface layer of the workpiece. A larger workpiece can be produced by sequential "jetting" of melt layers made of particulate material.

Alternatively, a laser coating process can also be carried out in the mode of wire build-up welding, where a wire is used instead of a powder. Correspondingly, the method according to the invention also comprises an embodiment in which a wire made of an aluminium alloy, as indicated above, is used.

To optimize the conductivity of the three-dimensional object prepared via the process, it is possible to subject the object after its preparation to a heat treatment, which if implemented is preferably at a temperature from 400°C to 500°C, and/or for a time of 20 to 600 Min, more preferably of 20 to 200 Min. However, as such heat treatment tends to unfavourably affect the mechanical properties of the three-dimensional object such treatment is only implemented for objects, which require optimized conductivity and where the mechanical properties are less important.

To adjust the final properties, the process may further comprise any conventional post processing steps (i.e. steps after the preparation of the three-dimensional object), such as e.g. machining and/or painting and/or coating.

In a yet further aspect, the present invention concerns a three-dimensional object prepared using an aluminium alloy in powder form or a mixture of respective elemental or mixed elemental powder precursors thereof, wherein the aluminium alloy in powder form is an aluminium alloy in powder form as defined above and wherein the three-dimensional object comprises or consists of such an aluminium alloy. In a preferred embodiment, the particular three-dimensional object is prepared according to the process as described above. Alternatively, the three-dimensional object can also be prepared by isostatic pressing, pressing and sintering or by melting and casting, whereas the latter from an economic standpoint is least preferred due to the necessity to first prepare the powder and then remelt the same for casting processing. Thus, in one embodiment the three-dimensional object is not prepared via a melting and casting method. Whether the object has been prepared by such process can be assessed via the grain size in the object, which results from the processing (see below).

As has been noted above, the inventive aluminium alloy in powder form preferably has an Ni content 4 wt.-% or less and an Fe content of 2 wt.-% or less. Accordingly, also for the three-dimensional object it is preferred that it has an Ni content 4 wt.-% or less and an Fe content of 2 wt.-% or less.

For the three-dimensional object it is preferred that it has a relative density of 95% or more, preferably 98% or more, even more preferably 99% or more and even more preferably 99.5% or more, wherein the relative density is defined as the ratio of the measured density and the theoretical density. The theoretical density is the density of the bulk material (i.e. the cast aluminium alloy). The measured density is the density of the three-dimensional object as determined by the Archimedes Principle according to ISO 3369: 2006.

A further means to distinguish three-dimensional objects prepared via additive manufacture (in particular selective laser sintering or selective laser melting) from conventionally prepared objects is the grain size, which results from only very small areas being melted on activation by the radiation source and rapidly cooled afterwards. Thus, in a preferred embodiment the inventive three-dimensional objects have grain sizes as conventionally provided by selective laser sintering or selective laser melting. In this case, the processing of the tree-dimensional object by an additive manufacturing process is determined form different magnifications of cross section images from etched surfaces, where the melt pool structure and dividing lines between melt pools can be detected. In this case, magnifications of about 50x or 100x produce tightly cropped images of detail level, from which the trained eye can easily distinguish between a cast microstructure and a microstructure as obtained by additive manufacture, in particular selective laser melting or selective laser sintering.

In a preferred embodiment, the aluminium alloy forming the three-dimensional object (i.e. a test specimen according to DIN EN ISO 6892-1 prepared from this alloy) has one or more of the following properties: a tensile strength of from 70 to 230 MPa and preferably of from 100 to 230 MPa, an electrical conductivity of from 40 to 63% IACS and preferably of from 45 to 63% IACS, a thermal conductivity of from 150 to 225 W/mK, preferably of from 160 to 225 W/mK and more preferably of from 175 to 225 W/mK ,and an elongation at break of from 3 to 25%, preferably of from 3 to 20%. The tensile strength here is determined according to DIN EN ISO 6892-1. The electrical conductivity IACS is determined in relation to the electrical conductivity of commercially available copper, and can e.g. be determined according to ASTM E 1004-2017. The thermal conductivity for the purposes of this invention is determined by the plane transient heat source (hot disc method) for measuring thermal conductivity according to DIN EN ISO 22007-2:2015-12. Particularly preferred is a tensile strength of 120 MPa or more and/or 200 MPa or less and especially 140 MPa or more and/or 160 MPa or less. A particularly preferred electrical conductivity is 48% IACS or more and/or 61,5% IACS or less. A particularly preferred thermal conductivity is 185 W/mK or more and/or 210 W/mK or less. A particularly preferred elongation at break is 6% or more and/or 20% or less. For the elongation at break, a high percentage is desired.

Corresponding three-dimensional objects have been found to contain a stable distribution of non-soluble alloying elements (Ni and Fe) as a continuous network. In addition, the Ni and Fe seem to have a pinning effect on grain boundaries and restrict the grain growth. This increases the resistance against degradation of the mechanical properties at elevated temperatures.

The above indicated characteristics are particularly advantageous in components of electronic devices and in electric mobility device. Accordingly, the inventive three-dimensional object is preferably a component of an electronic device, in particular a component of a CPU or an LED, an antenna, waveguide or multiplexer, or a component of an electric mobility device, such as a component of an electric motor in an automobile.

In a yet further aspect the present invention concerns a device for implementing a process as described above, wherein the device comprises a radiation source, a process chamber having an open container with a container wall, a support, which is inside the process chamber, wherein process chamber and support are moveable against each other in vertical direction, a storage container and a recoater, which is moveable in horizontal direction, and wherein the storage container is at least partially filled with an aluminium alloy in powder form as defined above or a powder mixture, which provides such alloy. In connection with this device it is noted that the device is only claimed in as much as it comprises aluminium alloy in powder form as defined above or a powder mixture, which provides such alloy, so that effectively the combination of the device and the powder is claimed as a kit.

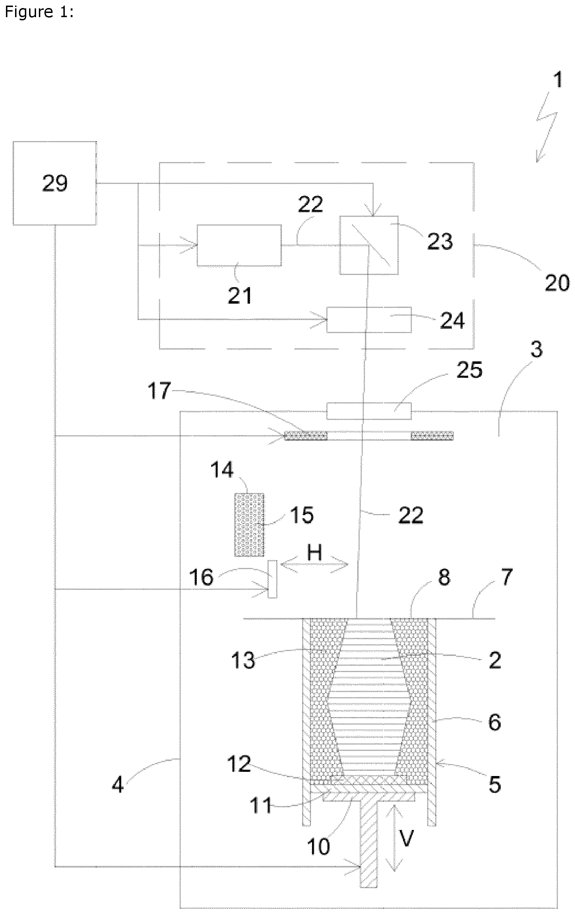

Other features and embodiments of the invention are provided in the following description of an exemplary embodiment taking account of the appended Figure 1.

The device represented in Figure 1 is a laser sintering or laser melting apparatus 1 for the manufacture of a three-dimensional object 2. The apparatus 1 contains a process chamber 3 having a chamber wall 4. A container 5 being open at the top and having a container wall 6 is arranged in the process chamber 3. The opening at the top of the container 5 defines a working plane 7. The portion of the working plane 7 lying within the opening of the container 5, which can be used for building up the object 2, is referred to as building area 8. Arranged in the container 5, there is a support 10, which can be moved in a vertical direction V, and on which a base plate 11 which closes the container 5 toward the bottom and therefore forms the base of the container 5 is attached. The base plate 11 may be a plate which is formed separately from the support 10 and is fastened on the support 10, or may be formed so as to be integral with the support 10. A building platform 12 on which the object 2 is built may also be attached to the base plate 11. However, the object 2 may also be built on the base plate 11, which then itself serves as the building platform.

In Figure 1, the object 2 to be manufactured is shown in an intermediate state. It consists of a plurality of solidified layers and is surrounded by building material 13 which remains unsolidified. The apparatus 1 furthermore contains a storage container 14 for building material 15 in powder form, which can be solidified by electromagnetic radiation, for example a laser, and/or particle radiation, for example an electron beam. The apparatus 1 also comprises a recoater 16, which is movable in a horizontal direction H, for applying layers of building material 15 within the building area 8. Optionally, a radiation heater 17 for heating the applied building material 15, e.g. an infrared heater, may be arranged in the process chamber, but for processing of the inventive aluminium alloy powders this is not necessary.

The device in Figure 1 furthermore contains an irradiation device 20 having a laser 21, which generates a laser beam 22 that is deflected by means of a deflecting device 23 and focused onto the working plane 7 by means of a focusing device 24 via an entrance window 25, which is arranged at the top side of the process chamber 3 in the chamber wall 4.

The device in Figure 1 furthermore contains a control unit 29, by means of which the individual component parts of the apparatus 1 are controlled in a coordinated manner for carrying out a method for the manufacture of a three-dimensional object. The control unit 29 may contain a CPU, the operation of which is controlled by a computer program (software). During operation of the apparatus 1, the following steps are repeatedly carried out: For each layer, the support 10 is lowered by a height which preferably corresponds to the desired thickness of the layer of the building material 15. The recoater 16 is moved to the storage container 14, from which it receives an amount of building material 15 that is sufficient for the application of at least one layer. The recoater 16 is then moved over the building area 8 and applies a thin layer of the building material 15 in powder form on the base plate 11 or on the building platform 12 or on a previously applied layer. The layer is applied at least across the cross-section of the object 2, preferably across the entire building area 8. The cross-section of the object 2 to be manufactured is then scanned by the laser beam 22 in order to selectively solidify this area of the applied layer. These steps are carried out until the object 2 is completed. The object 2 can then be removed from the container 5.

According to the invention, an aluminium alloy powder as described above is used as building material 15.

In the following, the present invention is further illustrated by mean of examples, which however should not be construed as limiting the invention thereto in any manner.

### Examples

### Example 1

Several mixtures or pure aluminium powder and aluminium alloy powder with contents of 2.5% Ni and 1.0% Fe, respectively, with absolute compositions as indicated in the below table 1 were used to produce test specimens according to DIN EN ISO 6892-1: 2020 by DMLS in an EOS M290 or M280 machine. The test specimen had a thickness d₀ at their most narrow point of 5 mm and a surface S₀ of about 19,5 mm. Appropriate DMLS processing parameters were determined by screening trials, which included building sample parts with varying values of laser output power P, laser hatch distance d and laser speed v.

**Table 1**

| | Sample 1 | Sample 2 | Sample 3 | Sample 4 | Sample 5 | Sample 6 |
|---|---|---|---|---|---|---|
| Ni [wt.-%] | 1,1 % | 1,1 % | 1,1 % | 1,1 % | 1,1 % | 1,1 % |
| Fe [wt.-%] | 0,5% | 0,5% | 0,5% | 0,5% | 0,5% | 0,5% |
| Al | balance | balance | balance | balance | balance | balance |

During processing, it was observed that the sticking tendency of the alloys (on the recoater blade) was greatly reduced compared to pure aluminium grades.

The thus prepared test specimen were subjected to tensile testing according to DN EN ISO 6892-1:B10 (2020). The recorded yield point (R_{p0,2}), tensile strength (Rₘ), elongation at break (A) and the elastic modulus (m_{E}) are provided in the below table 2.). All measurements were carried out in horizontal direction to the building plane of the samples.

Further, in table 2 the electrical and thermal conductivities of the samples are indicated, which were measured according to ASTM E 1004-2017 eddy current method and ISO 22007-2 hot disk method respectively.

**Table 2**

| | Sample 1 | Sample 2 | Sample 3 | Sample 4 | Sample 5 | Sample 6 |
|---|---|---|---|---|---|---|
| R_{p0,2} [MPa] | 135 | 119 | 117 | 101 | 111 | 111 |
| Rₘ [MPa] | 202 | 201 | 200 | 198 | 197 | 196 |
| A [%] | 16.5 | 17.5 | 17.5 | 19.0 | 17.5 | 18.0 |
| thermal conductivity [W/mK] | 199 | 199 | 199 | 199 | 199 | 199 |
| electrical conductivity [% IACS] | 51 | 51 | 51 | 51 | 51 | 52 |

## Claims

1. Aluminium alloy in powder form comprising up to 8 wt.-% Ni and up to 4 wt.-% Fe, **characterised in that** the alloy has a particle size d50 as determined according to ISO 13320 by laser scattering or laser diffraction of from 2 to 90 µm or a mixture of powders in accordance with the requirements of the aluminium alloy in powder form.

2. Aluminium alloy in powder form or mixture according to claim 1, which comprises up to 4 wt.-% Ni, preferably at least 0.1 and/or not more than 2 wt.-% Ni, and more preferably at least 0.8 and/or not more than 1.6 wt.-% of Ni.

3. Aluminium alloy in powder form or mixture according to claim 1 or 2, which comprises up to 2 wt.-% Fe, preferably up to 0.6 wt.-% Fe and more preferably at least 0.1 and/or not more than 0.5 wt.-% of Fe.

4. Aluminium alloy in powder form or mixture according to any one of claims 1 to 3, wherein the alloy further comprises up to 1 wt.-% of alloy elements other than Al, Fe and Ni and unavoidable impurities, preferably wherein the balance to Ni, Fe and unavoidable impurities is aluminium.

5. Aluminium alloy in powder form or mixture according any one of claims 1 to 4, wherein the powder has a particle size d50 of from at least 15 µm and/or up to 75 µm and preferably at least 25 µm and/or up to 50 µm as determined according to ISO 13320 by laser scattering or laser diffraction.

6. Process for the preparation of an aluminium alloy in powder form, preferably aluminium alloy in powder form as defined in any one of claims 1 to 5, wherein a molten aluminium alloy having a composition as defined in any one of claims 1 to 5 is atomized in an appropriate device or by dry alloying elemental metal powders or precursor powders having two or more elements in them.

7. Process for the manufacture of a three-dimensional object, comprising providing an aluminium alloy in powder form comprising up to 8 wt.-% Ni and up to 4 wt.-% Fe, preferably aluminium alloy in powder form as defined in any one of claims 1 to 5, or a mixture of respective elemental or mixed elemental powder precursors thereof, and preparing the object by applying the aluminium alloy in powder form or powder mixture layer on layer and selectively solidifying the powder, in particular by application of electromagnetic radiation, at positions in each layer, which correspond to the cross section of the object in this layer, wherein the positions are scanned with an interaction zone, in particular with a radiation interaction zone of an energy beam bundle.

8. Three-dimensional object prepared using an aluminium alloy in powder form or a mixture of respective elemental or mixed elemental powder precursors thereof, in particular prepared according to the process as described in claim 6, wherein the aluminium alloy in powder form is an aluminium alloy in powder form according to any one of claims 1 to 5 and wherein the three-dimensional object comprises or consists of such an aluminium nickel alloy.

9. Three-dimensional object according to claim 8, which has a relative density of 95% or more, preferably 98% or more and more preferably 99.5% or more, wherein the relative density is defined as the ratio of the measured density and the theoretical density and is determined by the Archimedes Principle according to ISO 3369: 2006.

10. Three-dimensional object according to claim 9, wherein the aluminium alloy forming the three-dimensional object has one or more of the following properties: a tensile strength of from 70 to 230 MPa, a conductivity of from 40 to 63% IACS, a thermal conductivity of from 150 to 225 W/mK and an elongation at break of from 3 to 25%.

11. Three-dimensional object according to any one of claims 9 or 10, which is a component of an electronic device, preferably a component of a CPU or an LED, an antenna, waveguide or multiplexer, or an electric mobility device.

12. Device for implementing a process according to claim 7, wherein the device comprises a radiation source, a process chamber having an open container with a container wall, a support, which is inside the process chamber, wherein process chamber and support are moveable against each other in vertical direction, a storage container and a recoater, which is moveable in horizontal direction, and wherein the storage container is at least partially filled with an aluminium alloy in powder form according to anyone of claims 1 to 6 or a powder mixture, which provides such alloy.
